# FASCICULE DE BREVET EUROPEEN

(11) **EP 4 415 082 B1**
(45) Date de publication et mention de la délivrance du brevet: **01.10.2025**
(21) Numéro de dépôt: 24156582.9
(22) Date de dépôt: 08.02.2024
(51) Int. Cl.: H01M 8/0276, C25B 1/04, C25B 9/70, H01M 8/0282, H01M 8/2432, H01M 8/2475, H01M 8/248, H01M 8/2485, H01M 8/2483, C25B 9/77, C25B 15/08, C25B 1/042, H01M 8/12

(54) **ENSEMBLE DE DISTRIBUTION DE GAZ NOTAMMENT POUR ÉLECTROLYSEURS OU PILES À COMBUSTIBLE À OXYDES SOLIDES À HAUTE TEMPÉRATURE**
GASVERTEILUNGSANORDNUNG, INSBESONDERE FÜR ELEKTROLYSEURE ODER BRENNSTOFFZELLEN DES HOCHTEMPERATUR-FESTOXID-TYPS
GAS DISTRIBUTION ASSEMBLY, IN PARTICULAR FOR HIGH TEMPERATURE SOLID OXIDE TYPE ELECTROLYSERS OR FUEL CELLS

(30) Priorité: 10.02.2023 FR 2301265
(43) Date de publication de la demande: 14.08.2024
(73) Titulaire: Commissariat à l'Energie Atomique et aux Energies Alternatives, 75015 Paris (FR)
(72) Inventeur: VULLIEZ, Karl, 38054 GRENOBLE (FR); DI IORIO, Stéphane, 38054 GRENOBLE (FR); MAISSE, Amélie, 38054 GRENOBLE (FR); MONNET, Thibault, 38054 GRENOBLE (FR)
(74) Mandataire: Brevalex

(56) Documents cités:
- EP-A1- 3 016 192
- EP-A1- 3 667 793

## Description

### DOMAINE TECHNIQUE DE L'INVENTION

La présente invention concerne un ensemble de distribution de gaz, notamment pour électrolyseurs ou piles à combustible à oxydes solides à haute température.

La présente invention se rapporte au domaine général de l'électrolyse à haute température (EHT), en particulier l'électrolyse de la vapeur d'eau à haute température (EVHT), respectivement désignées par les appellations anglaises « *High Temperature Electrolysis* » (HTE) et « *High Temperature Steam Electrolysis* » (HTSE).

Plus précisément, l'invention se rapporte au domaine des électrolyseurs à oxydes solides à haute température, désignés habituellement par l'acronyme SOEC (pour « *Solide Oxide Electrolyzer Cell* » en anglais).

Elle concerne également le domaine des piles à combustible à oxydes solides à haute température, désignées habituellement par l'acronyme SOFC (pour « *Solid Oxide Fuel Cells* » en anglais).

Ainsi, de façon plus générale, l'invention se réfère au domaine des empilements à oxydes solides de type SOEC/SOFC fonctionnant à haute température.

Plus précisément, l'invention concerne un ensemble de distribution de gaz comprenant une première plaque, telle qu'une plaque de distribution de gaz, et une seconde plaque, telle qu'une plaque terminale d'un empilement à oxydes solides de type SOEC/SOFC fonctionnant à haute température, et un dispositif d'interface d'étanchéité permettant d'assurer l'étanchéité entre les première et seconde plaques pour la distribution de gaz.

En particulier, l'invention concerne un dispositif d'interface d'étanchéité permettant d'assurer l'étanchéité d'un empilement (ou « *stack* » en anglais) à oxydes solides de type SOEC/SOFC monté sur une plaque de distribution de gaz, également dénommée collecteur ou « *manifold* » selon la terminologie anglaise. De manière connue, la plaque de distribution de gaz ou manifold permet d'envoyer et de récupérer les gaz pour le circuit anodique et le circuit cathodique de l'empilement à oxydes solides de type SOEC/SOFC.

### ETAT DE LA TECHNIQUE

Les empilements à oxydes solides de type SOEC/SOFC, que ce soit sur les bancs de fabrication/conditionnement ou intégrés *in fine* au sein de systèmes industriels, doivent être connectés à des circuits d'alimentation en gaz d'une installation fixe.

Afin de simplifier l'intégration, le montage et le démontage des empilements, il est connu de réaliser une telle connexion via des interfaces mécaniques facilement démontables, excluant les solutions de type soudées. Il est alors nécessaire de prévoir une étanchéité entre le dispositif de distribution de gaz de l'installation fixe et l'empilement à oxydes solides de type SOEC/SOFC.

La réalisation d'une telle étanchéité est complexe : les joints d'étanchéité doivent résister à haute température (de l'ordre de 600°C à 1000 °C), et procurer en outre une isolation électrique entre le dispositif de distribution de gaz de l'installation fixe et l'empilement à oxydes solides de type SOEC/SOFC.

Il est connu par exemple d'utiliser, pour assurer l'étanchéité entre les circuits d'alimentation en gaz, des joints d'étanchéité composés de matériaux d'origine minérale (argile, talc, mica, céramique, vitrocéramique) mis en compression par le biais de systèmes mécaniques externes de serrage. Des joints plats d'étanchéité compressifs formés à partir de poudre de vermiculite compactée sont par exemple utilisés autour des orifices de communication pour l'amenée ou la sortie de gaz d'une plaque de distribution de gaz ou manifold.

Ces joints d'étanchéité assurent, outre leur fonction d'étanchéité, une fonction d'isolation électrique entre les interfaces mécaniques entre lesquelles ils sont montés.

Toutefois, de tels joints d'étanchéité nécessitent l'application d'un effort de compression significatif pour obtenir une étanchéité suffisante par densification du matériau et adhésion aux interfaces en regard. Une contrainte de serrage de l'ordre du MPa, voire plusieurs dizaines de MPa, est requise pour atteindre des taux de compression du joint, permettant d'assurer l'étanchéité.

A l'inverse, un écrasement trop important du joint d'étanchéité peut conduire à sa rupture, ce qui peut compromettre sa fonction d'étanchéité.

Par ailleurs, une contrainte de serrage de plusieurs MPa à haute température peut générer un chargement en flexion sur les plaques terminales de l'empilement, cette mise en flexion qui peut conduire à une déformation plastique de ces plaques terminales, de l'empilement et/ou de la plaque de distribution de gaz. Lorsque de nombreux montages et démontages d'un empilement sur la plaque de distribution de gaz sont réalisés, notamment sur des bancs de conditionnement, la planéité de la plaque de distribution de gaz ou manifold peut se dégrader au fil du temps. Le risque de dégradation s'amplifie encore plus lorsque la largeur de la base des empilements augmente.

La plaque de distribution de gaz ou manifold, placée au cœur du banc de conditionnement est un composant difficile à remplacer. Le conditionnement d'un stack sur une plaque manifold déformée, en plus de poser des problèmes d'étanchéité, se traduira par des déformations de plus en plus importantes au niveau des plaques terminales des empilements.

Plus généralement, de telles déformations peuvent être observées dans un ensemble de distribution de gaz ayant des plaques parallèles et couplées sous pression par un dispositif de serrage, avec un dispositif d'interface d'étanchéité comportant un joint autour d'un orifice de communication de l'une des plaques pour l'amenée ou la sortie de gaz à destination de l'autre plaque. EP3016192 A1 et EP3667793 A1 décrivent un ensemble de distribution de gaz pour une pile à combustible comportant des entretoises en combinaison avec des joints d'étanchéité.

### EXPOSE DE L'INVENTION

La présente invention a pour but de remédier au moins partiellement aux inconvénients mentionnés ci-dessous.

A cet effet, la présente invention concerne un ensemble de distribution de gaz comprenant :
- une première plaque et une seconde plaque, la première plaque comprenant au moins un orifice de communication pour l'amenée ou la sortie de gaz positionné en vis-à-vis d'un orifice de communication correspondant de la seconde plaque, lesdites première et seconde plaques s'étendant parallèlement l'une à l'autre ;
- un dispositif de serrage pour coupler sous pression lesdites première et seconde plaques dans un plan de couplage parallèle auxdites première et seconde plaques ; et
- un dispositif d'interface d'étanchéité comportant au moins un joint d'étanchéité disposé dans ledit plan de couplage autour dudit au moins un orifice de communication de ladite première plaque.

Selon l'invention, le dispositif d'interface d'étanchéité comprend une entretoise disposée dans ledit plan de couplage entre les première et seconde plaques, ladite entretoise et le ou les joint(s) d'étanchéité formant une interface d'étanchéité ayant deux plans de symétrie perpendiculaires entre eux et perpendiculaires audit plan de couplage, l'épaisseur du ou des joint(s) d'étanchéité avant couplage sous pression desdites première et seconde plaques étant strictement supérieure à l'épaisseur de ladite entretoise.

L'entretoise permet ainsi de limiter l'écrasement du ou des joints d'étanchéité lors du couplage sous pression des première et seconde plaque de l'ensemble de distribution de gaz, et donc le mouvement des première et/ou seconde plaques écrasant le ou les joint(s) d'étanchéité. La disposition symétrique de l'interface d'étanchéité dans le plan de couplage et la limitation de l'écrasement du ou des joints d'étanchéité grâce à l'entretoise permettent de réduire les risques de flexion des première et seconde plaques de l'ensemble de distribution de gaz lors du couplage sous pression.

La déformation des première et seconde plaques est ainsi limitée et leur planéité peut être conservée au fil du temps.

Les risques de flexion des plaques de l'ensemble de distribution de gaz sont ainsi réduits lors de la mise en compression mécanique du stack et des différents éléments du dispositif d'interface d'étanchéité.

L'ensemble de distribution de gaz peut en outre comporter l'une ou plusieurs des caractéristiques suivantes prises isolément ou en combinaison.

Avantageusement, l'aire de la surface formée par l'entretoise dans ledit plan de couplage est supérieure à l'aire de la surface formée par le ou les joint(s) d'étanchéité dans ledit plan de couplage.

La surface d'appui dans le plan de couplage formée par l'entretoise, supérieure à celle du ou des joints d'étanchéité, permet d'éviter un écrasement trop important du ou des joint(s) d'étanchéité, même sous une contrainte de serrage supérieure à la valeur requise pour comprimer le ou les joint(s) d'étanchéité.

Dans un mode de réalisation, la raideur du matériau constituant l'entretoise est supérieure à la raideur du matériau constituant le ou les joint(s) d'étanchéité.

L'entretoise permet ainsi de fournir un appui mécanique plus rigide que le ou les joint(s) d'étanchéité dans l'interface d'étanchéité, limitant le déplacement des première et seconde plaques lors de leur couplage sous pression. Un tel appui dans le plan de couplage permet de limiter (géométriquement) le moment fléchissant des première et seconde plaques. Dans un mode de réalisation avantageux, l'entretoise comporte au moins une portion formant cadre s'étendant à la périphérie d'un joint d'étanchéité. Cette portion formant cadre se combine avec le joint d'étanchéité pour apporter une étanchéité renforcée autour de l'orifice de communication.

Dans un mode de réalisation préféré, lorsque le dispositif d'interface d'étanchéité comporte plusieurs joints d'étanchéité, ladite entretoise comporte une portion d'appui disposée à équidistance desdits joints d'étanchéité.

La portion d'appui de l'entretoise est ainsi placée à la distance la plus courte possible des différents joints dans l'interface d'étanchéité. Le moment fléchissant appliqué sur les première et/ou seconde plaques est ainsi réduit lors de leur couplage sous pression.

En pratique, ladite entretoise comporte plusieurs portions formant cadre s'étendant à la périphérie respectivement desdits plusieurs joints d'étanchéité.

Avantageusement, ladite entretoise est formée d'une structure plane monobloc comportant lesdites portions formant cadre.

La structure plane monobloc permet de faciliter le positionnement de l'entretoise et des joints d'étanchéité dans le plan de couplage des première et seconde plaques. En faisant varier la surface de la structure plane monobloc dans le plan de couplage et la raideur du matériau formant la structure plane monobloc, il est possible de contrôler la rigidité de l'entretoise en fonction du taux d'écrasement souhaité pour les joints d'étanchéité.

En pratique, les dimensions d'une ouverture formée par chaque portion formant cadre s'étendant à la périphérie d'un joint d'étanchéité dans le plan de couplage sont strictement supérieures aux dimensions dudit joint d'étanchéité dans ledit plan de couplage.

Un jeu est ainsi formé entre le joint d'étanchéité et la portion formant cadre de l'entretoise, permettant une expansion libre du joint d'étanchéité dans le plan de couplage lors de l'écrasement du joint d'étanchéité.

Dans un mode de réalisation particulier, chaque portion formant cadre est munie d'un ou plusieurs doigts en saillie s'étendant vers ledit joint d'étanchéité et en contact avec ledit joint d'étanchéité.

Le ou les doigts en saillie permettent de fournir un support au joint dans l'entretoise, facilitant la mise en place du dispositif d'interface d'étanchéité entre les première et seconde plaques. Dans un autre mode de réalisation particulier, ledit joint d'étanchéité comporte au moins une excroissance s'étendant dans le plan de couplage et en appui dans une zone de contact avec la portion formant cadre, ladite zone de contact de la portion formant cadre ayant une largeur réduite dans le plan de couplage par rapport à la largeur de la portion formant cadre en dehors de ladite zone de contact.

L'excroissance permet de fournir un support au joint dans l'entretoise, facilitant la mise en place du dispositif d'interface d'étanchéité entre les première et seconde plaques.

Lors de l'expansion du joint d'étanchéité dans le plan de couplage, la zone de contact de la portion formant cadre, de largeur réduite, peut se déformer, voire se casser, évitant que le joint d'étanchéité ait un écrasement réduit au niveau de l'excroissance en appui contre la portion formant cadre.

De préférence, le ou les joint(s) d'étanchéité est/sont réalisé(s) en un matériau à base minérale, tel qu'en mica, argile ou talc.

De même, ladite entretoise est réalisée en un matériau à base minérale tel qu'en mica, argile ou talc.

L'interface d'étanchéité est ainsi bien adaptée à réaliser un couplage étanche à haute température (entre 600°C et 1000°C) tout en assurant une fonction d'isolation électrique entre les première et seconde plaques.

En pratique, l'épaisseur du ou des joint(s) d'étanchéité est comprise entre 0,3 et 1 mm, et de préférence entre 0,5 et 1 mm avant couplage sous pression desdites première et seconde plaques.

Dans un mode de réalisation particulier et non limitatif, l'épaisseur du ou des joint(s) d'étanchéité est sensiblement égale à 1 mm et l'épaisseur de ladite entretoise est sensiblement égale à 0,8 mm avant couplage sous pression desdites première et seconde plaques.

Dans l'ensemble de distribution de gaz décrit précédemment, ladite première plaque peut être une plaque de distribution de gaz et ladite seconde plaque peut être une plaque terminale d'un empilement à oxydes solides de type SOEC/SOFC fonctionnant à haute température.

D'autres particularités et avantages de l'invention apparaitront encore dans la description donnée ci-après.

### BREVE DESCRIPTION DES DESSINS

Aux dessins annexés, donnés à titre d'exemples non limitatifs :
- La [Fig. 1A] représente, selon un schéma de principe en vue de face, un ensemble de distribution de gaz adapté à mettre en oeuvre la présente invention ;
- La [Fig. 1B] représente, selon un schéma de principe en perspective éclatée, un ensemble de distribution de gaz selon un premier mode de réalisation de l'invention;
- La [Fig. 2] représente, selon une vue schématique de dessus, un dispositif d'interface d'étanchéité associé à une première plaque de l'ensemble de distribution de gaz de la figure 1 ;
- La [Fig. 3] est une vue schématique de dessus du dispositif d'interface d'étanchéité de la figure 2 ;
- La [Fig. 4] est une vue en perspective d'un détail agrandie du coin supérieur gauche de la figure 2 ;
- La [Fig. 5] est un schéma illustrant des rapports de dimensions du dispositif d'interface d'étanchéité de la figure 3 ;
- Les [Fig. 6A] et [Fig. 6B] sont des schémas comparatifs de la déformation d'un ensemble de distribution de gaz selon l'art antérieur et selon un exemple de réalisation de l'invention ;
- La [Fig. 7] représente schématiquement des courbes de taux d'écrasement d'une interface d'étanchéité selon l'art antérieur et selon un exemple de réalisation de l'invention ;
- La [Fig. 8] est une vue schématique de dessus d'un dispositif d'interface d'étanchéité selon un deuxième mode de réalisation ;
- La [Fig. 9] est une vue schématique de dessus d'un dispositif d'interface d'étanchéité selon un troisième mode de réalisation ;
- La [Fig. 10] est une vue schématique de dessus d'un dispositif d'interface d'étanchéité selon un quatrième mode de réalisation ;
- La [Fig. 11] est une vue en perspective d'un détail A agrandi du dispositif d'interface d'étanchéité de la figure 10 ;
- La [Fig. 12] est une vue schématique de dessus d'un dispositif d'interface d'étanchéité selon un cinquième mode de réalisation ;
- La [Fig. 13] est une vue en perspective d'un détail B agrandi du dispositif d'interface d'étanchéité de la figure 12 ;
- La [Fig. 14] est une vue en perspective d'un détail C agrandi du dispositif d'interface d'étanchéité de la figure 12 ;
- La [Fig. 15] représente, selon un schéma de principe en perspective éclatée, un ensemble de distribution de gaz selon un second mode de réalisation de l'invention; et
- La [Fig. 16] est une vue schématique de dessus du dispositif d'interface d'étanchéité de la figure 15.

Dans l'ensemble des figures, des références identiques peuvent désigner des éléments identiques ou analogues.

De plus, les différentes parties sur les figures ne le sont pas nécessairement selon une échelle uniforme pour rendre les figures plus lisibles.

### EXPOSE DETAILLE DE L'INVENTION

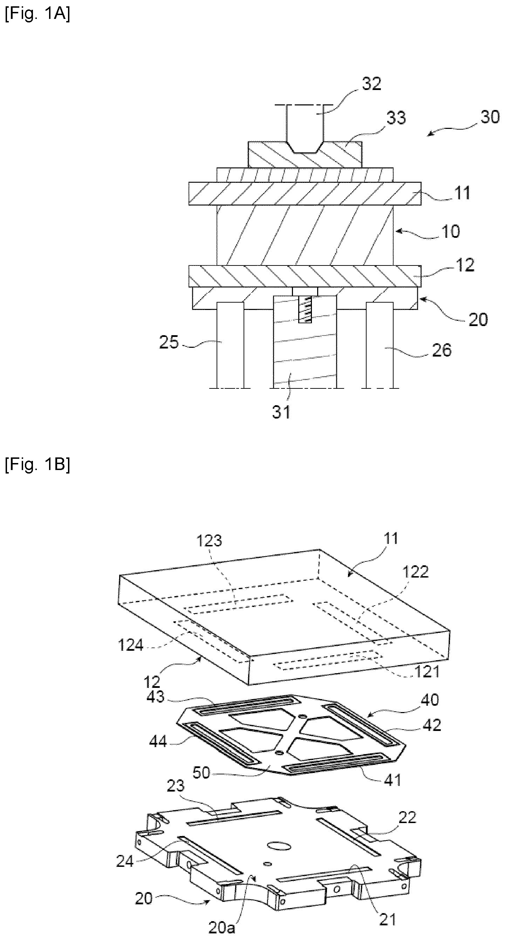

On va décrire tout d'abord en référence aux figures 1A et 1B un exemple d'ensemble de distribution de gaz selon un premier mode de réalisation de l'invention.

Dans ce premier mode de réalisation, l'ensemble de distribution de gaz est mis en oeuvre lors d'un couplage étanche à haute température d'un empilement à oxydes solides de type SOEC/SOFC fonctionnant à haute température avec une plaque de distribution de gaz pour l'amenée et la sortie des gaz. Dans la suite de la description, la plaque de distribution de gaz sera également dénommée communément collecteur ou manifold.

On a illustré très schématiquement à la figure 1A un empilement 10 à oxydes solides de type SOEC/SOFC.

De manière connue, un tel empilement 10 comporte plusieurs cellules électrochimiques, formées chacune d'une cathode, d'une anode et d'un électrolyte intercalé entre la cathode et l'anode, et plusieurs interconnecteurs intermédiaires agencés chacun entre deux cellules électrochimiques adjacentes. Cet ensemble de cellules électrochimiques et d'interconnecteurs intermédiaires peut également être désigné par « *stack* » en anglais. L'empilement 10 comporte une plaque terminale supérieure 11 et une plaque terminale inferieure 12, entre lesquelles les cellules électrochimiques et les interconnecteurs intermédiaires sont enserrés.

Un tel empilement est connu, par exemple dans le document FR 3 075 481, et n'a pas besoin d'être décrit plus en détails ici.

L'empilement 10 est prévu pour être couplé avec une plaque de distribution de gaz 20 pour l'amenée et la sortie des gaz dans l'empilement 10 à oxydes solides de type SOEC/SOFC fonctionnant à haute température.

La plaque de distribution de gaz ou collecteur 20 comprend au moins un orifice de communication pour l'amenée ou la sortie de gaz positionné en vis-à-vis d'une plaque terminale de l'empilement, et ici de la plaque terminale inférieure 12.

Dans ce mode de réalisation, le collecteur 20 comporte à titre d'exemple quatre conduits de collecte 25, 26 (deux sont visibles à la figure 1A) pour l'amenée et la sortie de gaz, chaque conduit de collecte comportant un orifice de communication 21, 22, 23, 24 débouchant à la surface 20a du collecteur 20 comme illustré à la figure 1B.

Dans le mode de réalisation des figures 1A et 1B, le collecteur 20 a une surface 20a de forme sensiblement rectangulaire ou carré, chaque orifice de communication 21, 22, 23, 24 du collecteur 20 s'étendant parallèlement respectivement à l'un des côtés de la surface 20a du collecteur 20. Chaque orifice de communication 21, 22, 23, 24 du collecteur 20 est destiné à être positionné en vis-à-vis d'un orifice de communication 121, 122, 123, 124 correspondant de la plaque terminale inférieure 12 de l'empilement 10 de sorte à permettre le couplage fluidique entre l'empilement 10 et le collecteur 20 pour l'amenée et la sortie de gaz.

La mise en œuvre de ce couplage fluidique entre une première plaque formée par le collecteur 20 et une seconde plaque formée par la plaque terminale inférieure 12 de l'empilement 10 nécessite un dispositif de serrage 30 pour coupler sous pression le collecteur 20 et la plaque terminale inférieure 12, parallèles entre eux.

Comme illustré à la figure 1A, le dispositif de serrage peut comporter un support 31 destiné à supporter le collecteur 20 en son centre, et une canne d'appui 31 associée à une plaque de répartition de force 33 en contact avec la plaque terminale supérieure 11 de l'empilement 10. La mise en pression du collecteur 20 et de l'empilement 10 est réalisée par application d'un effort au niveau de la canne d'appui 32, l'empilement 10 et le collecteur 20 étant serrés entre la plaque de répartition de force 33 et le support 31 du dispositif de serrage 30. Alternativement, un dispositif de serrage peut comporter des tiges de serrage filetées coopérant avec des écrous et s'étendant au travers d'orifices de fixation du collecteur 20 et de l'empilement 10. Des exemples d'un tel dispositif de serrage sont décrits par exemple dans le document FR 3 075 481, et il n'a pas besoin d'être décrit plus en détails ici.

Afin de garantir l'étanchéité dans un plan de couplage s'étendant entre le collecteur 20 et la plaque terminale inférieure 12, un dispositif d'interface d'étanchéité 40 est prévu tel que visible à la figure 1B.

Dans cette application mettant en œuvre un empilement 10 à oxydes solides de type SOEC/SOFC, le dispositif d'interface d'étanchéité doit procurer une étanchéité à haute température, c'est-à-dire résistant au moins à 600°C - 1000 °C.

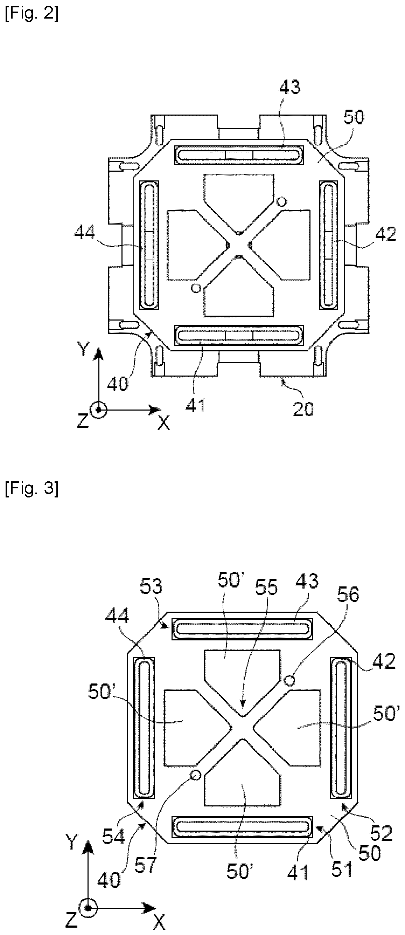

Un tel dispositif d'interface d'étanchéité 40 est illustré plus en détail aux figures 2 et 3.

Il comporte au moins un ou plusieurs joint(s) d'étanchéité disposé(s) dans le plan de couplage autour de chaque orifice de communication 21, 22, 23, 24 du collecteur 20.

Dans le mode de réalisation illustré aux figures 1 à 3, le dispositif d'interface d'étanchéité 40 comprend quatre joints d'étanchéité 41, 42, 43, 44 disposés respectivement autour de chaque orifice de communication 21, 22, 23, 24 du collecteur 20.

A titre illustratif, dans ce mode de réalisation, chaque orifice de communication 21, 22, 23, 24 du collecteur 20 est formée d'une ouverture en forme de fente allongée, et chaque joint d'étanchéité 41, 42, 43, 44 a une forme oblongue ou rectangulaire adaptée à s'étendre à la périphérie de chaque orifice de communication 21, 22, 23, 24 du collecteur 20.

Chaque joint d'étanchéité 41, 42, 43, 44 est par exemple un joint plat. Un tel joint d'étanchéité 41, 42, 43, 44 est réalisé sous forme de plaque, par compactage/laminage d'une poudre en matériau minéral.

Chaque joint d'étanchéité 41, 42, 43, 44 est réalisé dans une matière ayant des propriétés isolantes électriques compatibles avec les contraintes opérationnelles des électrolyseurs ou piles à combustible à oxydes solides à haute température.

Chaque joint d'étanchéité 41, 42, 43, 44 peut ainsi être réalisé en un matériau à base minérale du type mica, argile ou talc. Typiquement, les joints d'étanchéité 41, 42, 43, 44 peuvent être réalisés en mica.

L'épaisseur des joints d'étanchéité 41, 42, 43, 44 est comprise entre 0,3 et 1 mm, et de préférence entre 0,5 et 1 mm. Ces gammes de valeurs d'épaisseur sont bien adaptées pour les matériaux à base minérale du type mica ou talc par exemple, utilisables dans les applications d'électrolyses haute température. En dessous de 0,5 mm, il existe un risque de ne pas comprimer suffisamment les joints d'étanchéité, par exemple suite à des défauts de planéité de la surface 20a du collecteur ou de la plaque terminale inférieure 12 de l'empilement 10, et donc de ne pas obtenir l'étanchéité requise.

En revenant à la figure 2, l'épaisseur des joints d'étanchéité 41, 42, 43, 44 est mesurée dans une direction z perpendiculaire au plan (x,y) dans lequel s'étend la surface 20a du collecteur 20.

Il s'agit en outre de l'épaisseur des joints d'étanchéité 41, 42, 43, 44 avant application de la contrainte de compression.

L'épaisseur des joints d'étanchéité 41, 42, 43, 44 est ainsi donnée avant le montage serré du collecteur 20 et de l'empilement 10, c'est-à-dire avant le couplage sous pression de la surface 20a du collecteur 20 et de la plaque terminale inférieure 12 de l'empilement 10.

Les joints compressifs de type vermiculite nécessitent de fortes compressions pour permettre d'obtenir une étanchéité suffisante lors du couplage du collecteur 20 et de l'empilement 10. Une contrainte de compression égale à quelques MPa ou à plusieurs dizaines de MPa est nécessaire pour atteindre des taux de compression du joint d'étanchéité permettant d'assurer l'étanchéité.

Afin de limiter les déformations induites par ces contraintes de compression élevées, notamment au niveau de la surface 20a du collecteur 20 et de la plaque terminale inférieure 12 de l'empilement 10, le dispositif d'interface d'étanchéité 40 comprend une entretoise 50 destinée à être disposée dans le plan de couplage s'étendant entre le collecteur 20 et la plaque terminale inférieure 12 de l'empilement 10.

L'épaisseur des joints d'étanchéité 41, 42, 43, 44 avant couplage sous pression est strictement supérieure à l'épaisseur de l'entretoise 50.

Ainsi, l'entretoise 50 a une épaisseur inférieure à l'épaisseur des joints d'étanchéité 41, 42, 43, 44, ce qui permet lors du serrage de l'empilement 10 sur le collecteur 20 de comprimer en premier lieu les joints d'étanchéité 41, 42, 43, 44. Ce début de compression va entrainer l'écrasement des joints d'étanchéité 41, 42, 43, 44 jusqu'à ce que la plaque terminale inférieure 12 de l'empilement 10 vienne en butée à la fois contre les joints d'étanchéité 41, 42, 43, 44 et l'entretoise 50. L'entretoise a ainsi une fonction de limiteur d'écrasement, limitant le mouvement de la plaque terminale inférieure 12 écrasant les joints d'étanchéité 41, 42, 43, 44.

En outre, comme illustré à la figure 3, l'entretoise 50 et les joints d'étanchéité 41, 42, 43, 44 forment une interface d'étanchéité ayant deux plans de symétrie perpendiculaires entre eux et perpendiculaires au plan de couplage défini par le plan ((x,y)) sur la figure 3.

Dans cet exemple de réalisation, le dispositif d'interface d'étanchéité 40 a un plan de symétrie (x,z) et un plan de symétrie (y,z), tous deux perpendiculaires au plan de couplage ((x,y)) dans lequel est réalisée l'étanchéité.

Ainsi, l'entretoise 50 permet de limiter l'écrasement des joints d'étanchéité 41 ,42 ,43 ,44 et le mouvement de la plaque terminale inférieure 12 de manière symétrique dans le plan de couplage ((x, y)).

L'entretoise 50 permet ainsi de diminuer, de manière symétrique dans le plan de couplage, le moment fléchissant appliqué sur les plaques venant en appui sur les joints d'étanchéité 41, 42, 43, 44. Les contraintes et déformations appliquées sur le collecteur 20 et l'empilement 10, et notamment la plaque terminale inférieure 12 sont réduites.

Les risques de flexion des plaques terminales inférieure 12 et supérieure 11 de l'empilement 10 et du collecteur 20 sont diminués, afin de garantir la meilleure étanchéité possible lors de la mise en compression mécanique du stack et de des différents éléments du dispositif d'interface d'étanchéité 40.

Le choix de l'épaisseur des joints d'étanchéité 41, 42, 43, 44 et de l'entretoise 20 est déterminé de sorte que la différence d'épaisseur entre les joints d'étanchéité 41, 42, 43, 44 et l'entretoise 50 soit de quelques dixièmes, et par exemple comprise entre 1 et 3 dixièmes lorsque les joints d'étanchéité ont des épaisseurs de l'ordre du millimètre.

Ainsi, à titre d'exemple non limitatif, lorsque les joints d'étanchéité 41, 42, 43, 44 ont une épaisseur sensiblement égale à 1 mm, l'épaisseur de l'entretoise 50 est sensiblement égale à 0,8 mm avant couplage sous pression du collecteur 20 et de l'empilement 10.

Un écart d'épaisseur de 0,2 mm entre les joints d'étanchéité 41, 42, 43, 44 et l'entretoise 50 permet de garantir que le taux d'écrasement des joints d'étanchéité 41, 42, 43, 44 soit de l'ordre de 20% et en tout état de cause ne dépasse pas 25%.

Bien entendu, les valeurs d'épaisseurs et les différences d'épaisseur entre l'entretoise 50 et les joints d'étanchéité 41, 42, 43, 44 peuvent être choisies en fonction du taux d'écrasement maximal souhaité pour les joints d'étanchéité 41, 42, 43, 44.

Typiquement, pour un joint plat, on privilégie un taux d'écrasement maximal compris entre 10 et 25 % de sa côte initiale, avant couplage sous pression.

Il est possible ainsi de contrôler le taux d'écrasement des joints d'étanchéité 41, 42, 43, 44 et d'éviter leur rupture, qui pourrait nuire à l'étanchéité.

De préférence, dans les applications mettant en œuvre un empilement 10 à oxydes solides de type SOEC/SOFC, l'entretoise 50 est également réalisée en un matériau à base minérale, tel qu'en mica, argile ou talc.

Le dispositif d'interface d'étanchéité 40 permet ainsi de fournir une interface d'étanchéité bien adaptée à la haute température et procurant une isolation électrique adéquate.

Le matériau de l'entretoise 50 peut être similaire ou identique à celui des joints d'étanchéité 41,42, 43,44.

Parmi les matériaux disponibles utilisables pour le couplage étanche d'un empilement à oxydes solides de type SOEC/SOFC fonctionnant à haute température, il existe des nuances de vermiculite différentes, obtenues par des mises en œuvre différentes d'un même matériau. Les nuances de vermiculites présentent des raideurs ayant des valeurs pouvant varier selon un ratio de 1 à 10.

On rappelle que la raideur (en Newtons par mètre ou N/m) d'un corps caractérise la résistance à la déformation élastique de ce corps. Plus la raideur est élevée, plus l'effort à appliquer pour obtenir une déflexion donnée de ce corps est important ou moins la déflexion de ce corps sera importante pour un effort donné.

Ainsi, pour une même contrainte de compression, le taux d'écrasement d'une nuance de vermiculite pourra être dix fois plus important que pour une autre nuance de vermiculite.

La mesure de la raideur de ces matériaux minéraux et leur comparaison peuvent être mises en œuvre par des méthodes d'essai de compression, telles que spécifiées par la norme ISO 17892-7:2017, qui définit une méthode de détermination de résistance à la compression uniaxiale.

De préférence, la raideur du matériau constituant l'entretoise 50 peut être supérieure à la raideur du matériau constituant les joints d'étanchéité 41, 42, 43, 44.

La raideur du matériau constituant l'entretoise 50 permet ainsi d'augmenter la fonction de limiteur d'écrasement lors du couplage sous pression de l'empilement 10 et du collecteur 20. Une entretoise 50 avec une raideur plus importante que celle des joints d'étanchéité 41, 42, 43, 44 procure un appui mécanique rigide au niveau du dispositif d'interface d'étanchéité 40, qui bloque le mouvement relatif du collecteur 20 et de la plaque terminale inférieure 12 de l'empilement 10, limitant *de facto* la compression des joints d'étanchéité 41, 42, 43, 44 et assurant un appui permettant de réduire le moment fléchissant des plaques en vis-à-vis dans le plan de couplage (x,y).

Ainsi il est possible d'écraser les joints d'étanchéité 41, 42, 43, 44 dans une gamme précise de déformation, en fonction de la force de compression appliquée pour le serrage de l'ensemble de distribution de gaz.

De même, l'aire de la surface formée par l'entretoise 50 dans le plan de couplage peut être supérieure à l'aire de la surface formée par les joints d'étanchéité 41, 42, 43, 44 dans ce plan de couplage (x,y).

L'aire formée dans le plan de couplage, correspondant au plan (x,y) à la figure 3, correspond tant pour l'entretoise 50 que pour les joints d'étanchéité 41, 42, 43, 44 à la surface cumulée dans le plan (x,y) des surfaces des différentes portions d'entretoise 50 ou de joints d'étanchéité 41, 42, 43, 44.

Une grande surface formée par l'entretoise 50, comparativement à celle formée par les joints d'étanchéité 41, 42, 43, 44, dans le plan de couplage (x,y), permet de garantir, même sous une contrainte de compression largement supérieure à la valeur requise (par exemple quelques Mpa) que les joints d'étanchéité 41, 42, 43, 44 s'écrasent jusqu'à un taux d'écrasement souhaité, sans risque de sur-écrasement.

Si les matériaux de l'entretoise 50 et des joints d'étanchéité 41, 42, 43, 44 sont identiques et ont la même raideur, une aire de surface plus importante pour l'entretoise 50 que pour les joints d'étanchéité 41, 42, 43, 44 dans le plan de couplage (x,y) permet à l'entretoise 50 d'assurer une fonction de limiteur d'écrasement des joints d'étanchéité 41, 42, 43, 44.

Si en outre, le matériau de l'entretoise 50 a une raideur supérieure à celle du matériau constituant les joints d'étanchéité 41, 42, 43, 44, la fonction de limiteur d'écrasement des joints d'étanchéité 41, 42, 43, 44 assurée par l'entretoise est encore améliorée.

Dans le mode de réalisation illustré aux figures 1 à 3, l'entretoise 50 est formée d'une structure plane monobloc comportant des portions formant cadre 51, 52, 53, 54 s'étendant respectivement à la périphérie des joints d'étanchéité 41, 42, 43, 44.

La structure plane monobloc peut être formée d'une plaque monobloc comportant les portions formant cadre 51, 52, 53, 54 ou comme illustré à la figure 3, d'une plaque comportant en outre des ajours 50'. Les ajours 50' permettent de limiter la surface d'appui formée par l'entretoise 50 dans le plan de couplage (x,y) tout en conférant une bonne rigidité au dispositif d'interface d'étanchéité 40.

De manière non limitative, ces ajours 50' sont ici au nombre de 4, et disposés selon une répartition à 90 ° dans le plan de couplage (x,y).

La forme des ajours 50' peut être variable et adaptée selon la géométrie des différentes pièces de l'ensemble de distribution de gaz. De préférence, les ajours 50' permettent de conserver une aire de surface formée par l'entretoise 50 supérieure à l'aire de surface formée par les joints d'étanchéité 41, 42, 43, 44.

La forme des ajours 50' peut également permettre de conserver au centre de la structure plane monobloc de l'entretoise 50, une portion d'appui central 55.

Ici, et de manière non limitative, la portion d'appui central 55 a une forme de croix.

La portion d'appui central 55 est disposée à équidistance des joints d'étanchéité 41, 42, 43, 44 dans le dispositif d'interface d'étanchéité 40. Elle permet de limiter encore le moment fléchissant créé dans la plaque terminale inférieure 12 de l'empilement 10 et dans le collecteur 20 lors du couplage sous pression.

Une telle portion d'appui central 55 dans l'entretoise 50 est d'autant plus utile que les joints d'étanchéité 41, 42, 43, 44 associés aux orifices de communication 21, 22, 23, 34 sont placés à la périphérie du collecteur 20.

Plus la surface 20a du collecteur 20 est importante, plus les risques de déformation sont importants. De même, plus la distance entre les joints d'étanchéité 41, 42, 43, 44 est importante, plus les risques de flexion et de déformation sont importants.

La structure plane monobloc de l'entretoise 50 telle qu'illustrée à la figure 3 comporte en outre des orifices 56, ici au nombre de deux, permettant l'insertion de pions de positionnement (non illustrés). Ces pions de positionnement se montent dans des lamages réalisés dans la surface 20a du collecteur 20, et sont adaptés à s'insérer dans les orifices 56 de l'entretoise 50 et dans la plaque terminale inférieure 12 de l'empilement 10 pour garantir un centrage et un positionnement relatif précis de l'empilement 10, du dispositif d'interface d'étanchéité 40 et du collecteur 20 avant leur couplage sous pression.

Les portions formant cadre 51, 52, 53, 54 permettent d'enserrer chaque joint d'étanchéité 41, 42, 43, 44 et d'apporter un surcroit d'étanchéité autour de chaque orifice de communication 21, 22, 23, 24 du collecteur 20.

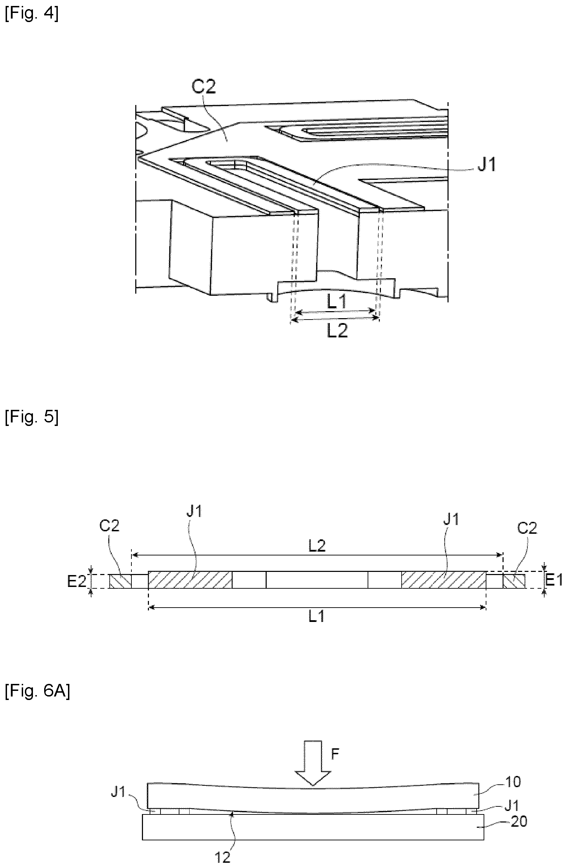

On a illustré aux figures 4 et 5 plus en détail le montage d'un joint J1 dans une portion formant cadre C2. Le joint J1 peut être n'importe quel joint d'étanchéité 41, 42, 43, 44 et la portion formant cadre C2 correspond à une portion formant cadre 51, 52, 53, 53 s'étendant à la périphérie d'un joint d'étanchéité 41, 42, 43, 44.

De manière générale, les dimensions de l'ouverture formée par une portion formant cadre C2 s'étendant à la périphérie d'un joint d'étanchéité J1 dans le plan de couplage (x,y) sont strictement supérieures aux dimensions du joint d'étanchéité J1 dans ce plan de couplage (x,y).

Comme décrit précédemment, la portion formant cadre C2 a une épaisseur E2 inférieure à l'épaisseur E1 du joint d'étanchéité J1, ce qui permet lors de l'application d'une force de compression, de comprimer en premier lieu le joint d'étanchéité J1.

En terme de géométrie, la largeur L1 du joint d'étanchéité J1 doit être plus faible que la largeur L2 de l'ouverture formée dans la portion formant cadre C2.

De même, la longueur du joint d'étanchéité J1 doit être plus faible que la longueur de l'ouverture formée dans la portion formant cadre C2.

Ainsi, il existe un jeu entre le joint d'étanchéité J1 et la portion formant cadre C2, permettant une libre expansion radiale, dans le plan de couplage (x,y), du joint d'étanchéité J1 lors de son écrasement.

De préférence, le jeu existe tout autour du joint d'étanchéité J1, entre le joint d'étanchéité J1 et la portion formant cadre C2.

La fonction d'étanchéité du joint d'étanchéité J1 peut ainsi être assurée dès lors que l'entretoise ne gêne pas l'obtention d'un taux d'écrasement minimal du joint d'étanchéité J1. L'épaisseur E1 du joint d'étanchéité J1 étant strictement supérieure à l'épaisseur E2 de la portion formant cadre C2, si l'effort de compression appliqué est suffisant, le taux d'écrasement du joint d'étanchéité J1 sera directement lié à la différence des épaisseurs E1 et E2.

Le joint d'étanchéité J1 pourra librement être écrasé et se déformer dans l'ouverture formée par la portion formant cadre C2, jusqu'à ce que le joint d'étanchéité J1 arrive en butée contre la portion formant cadre C2 de l'entretoise.

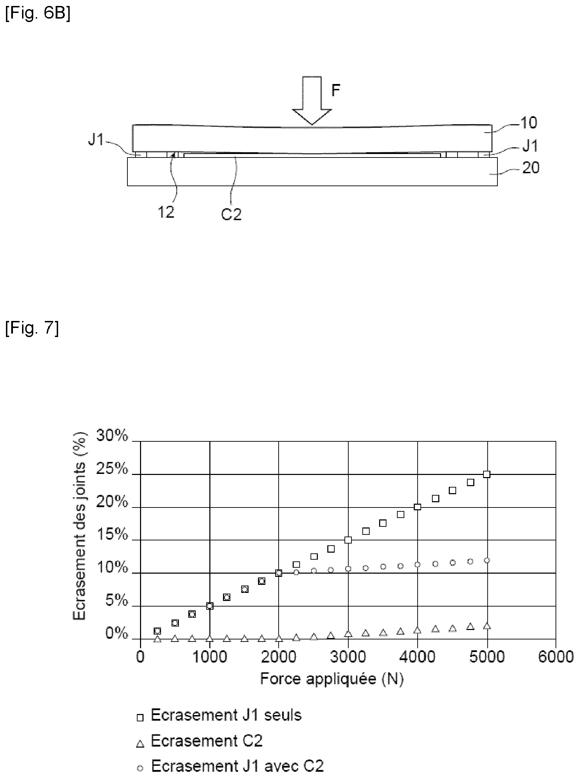

On a illustré schématiquement aux figures 6A, 6B et 7 le comportement comparé d'un ensemble de distribution de gaz tel que décrit précédemment, avec ou sans entretoise 50 dans le dispositif d'interface d'étanchéité 40.

Ainsi, lorsque qu'une force de compression F est appliquée pour le couplage par serrage de l'empilement 10 sur le collecteur 20, la présence de l'entretoise (situation de la figure 6B) permet en comparaison avec l'interface d'étanchéité sans entretoise (situation de la figure 6A), de limiter la flexion et le flambage des différentes pièces, et notamment de la plaque terminale inférieure 12 de l'empilement 10.

En effet, un effort de compression et de serrage de l'empilement 10 sur le collecteur 20, à plusieurs MPa et à haute température dans cette configuration, peut conduire à un chargement en flexion sur les plaques terminales de l'empilement 10 ou sur le collecteur 20, susceptible de déformer l'empilement 10 positionné sur le collecteur 20.

Le comportement du dispositif d'interface d'étanchéité 40 avec et sans entretoise 50 est également illustré à la figure 7, représentant schématiquement les courbes de taux d'écrasement (en % d'écrasement) en fonction de la force appliquée (en Newton) sur les joints d'étanchéité J1 seuls ou couplés à une entretoise comprenant une portion formant cadre C2 autour de chaque joint d'étanchéité J1.

On constate ainsi que le ratio d'écrasement des joints d'étanchéité J1 seuls peut atteindre 25% par exemple, pour une force de compression de 5000 N.

A contrario, lorsque les joints d'étanchéité J1 sont associés avec une entretoise comprenant une portion formant cadre C2 autour de chaque joint d'étanchéité J1, le taux d'écrasement est similaire à celui des joints d'étanchéité J1 seuls en début de compression, avec une force de compression ne dépassant pas 2000 N environ. Ensuite, le taux d'écrasement des joints d'étanchéité J1 est réduit de 25 % à 12 % environ pour une force de compression comprise entre 2000 et 5000 N.

Comme visible à la figure 7, l'écrasement des joints d'étanchéité J1 couplés à l'entretoise comprenant une portion formant cadre C2 suit alors la même pente d'écrasement que l'entretoise comprenant une portion formant cadre C2 seule.

L'entretoise 50 permet ainsi de contrôler le taux d'écrasement des joints d'étanchéité 41, 42, 43, 44 dans le dispositif d'interface d'étanchéité 40 et de réduire les contraintes de flexion dans l'empilement 10, notamment lorsque l'entretoise 50 reprend les efforts de compression au centre du plan de couplage (x,y).

Il est ainsi avantageux d'avoir une entretoise 50 formée d'une structure plane monobloc car le ratio d"écrasement maximal des joints d'étanchéité 41, 42, 43, 44 pourra être contrôlé en faisant varier la surface et/ou la raideur de l'entretoise 50.

L'épaisseur de l'entretoise 50 étant inférieure à l'épaisseur des joints d'étanchéité 41, 42, 43, 44, il est possible d'écraser les joints d'étanchéité 41, 42, 43, 44 à une valeur donnée, suffisante pour garantir l'étanchéité dans le plan de couplage, et sans être perturbé par la présence de l'entretoise 50.

A titre d'exemple non limitatif, on peut utiliser une entretoise 50 qui a une surface identique à la surface cumulée des joints d'étanchéité 41, 42, 43, 44 et formé d'un matériau, telle qu'une vermiculite, de raideur 4 fois supérieure à la raideur du matériau des joints d'étanchéité 41, 42, 43, 44.

Alternativement, on peut aussi sélectionner le même matériau pour l'entretoise 50 et les joints d'étanchéité 41, 42, 43, 44. La seule différence entre l'entretoise 50 et les joints d'étanchéité 41, 42, 43, 44 réside alors dans l'épaisseur E1 des joints d'étanchéité 41, 42, 43, 44 et l'épaisseur E2 de l'entretoise 50. On peut dimensionner l'entretoise 50 de telle sorte que E2 = 0.9 x E1.

Bien entendu, l'invention n'est pas limitée aux exemples de réalisation décrits précédemment.

En particulier, l'entretoise 50 décrite précédemment est formée d'une structure plane monobloc, ce qui permet de faciliter le positionnement du dispositif d'interface d'étanchéité 40 dans le plan de couplage (x,y).

Toutefois, dans le mode de réalisation décrit en référence aux figures 1 à 3, des défauts de planéité de la surface 20a du collecteur 20 ou de la plaque terminale inférieure 12 de l'empilement 10 peuvent conduire localement à des appuis ponctuels dans le plan de couplage (x,y), limitant le taux d'écrasement des joints d'étanchéité 41, 42, 43, 44. Cet effet peut notamment être amplifié si les joints d'étanchéité 41, 42, 43, 44 sont éloignés les uns des autres.

Afin de pallier cet inconvénient, l'entretoise du dispositif d'interface d'étanchéité peut être formée en plusieurs pièces.

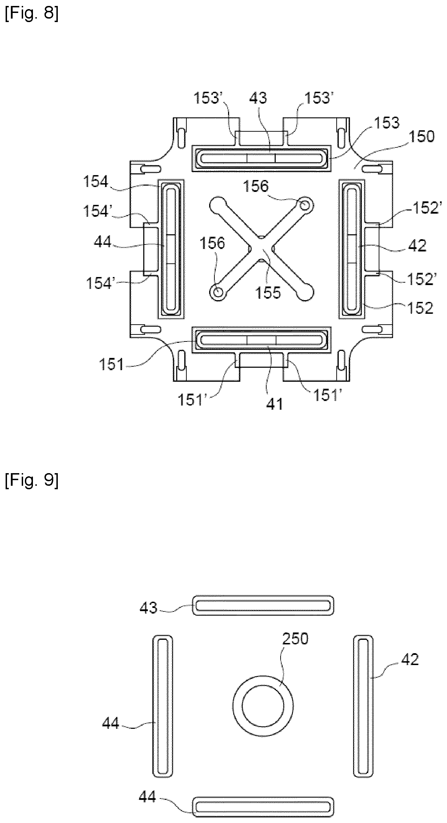

Comme illustré à la figure 8, l'entretoise 150 comporte par exemple plusieurs portions formant cadre 151, 152, 153, 154 disposées respectivement à la périphérie des joints d'étanchéité 41, 42, 43, 44.

Dans ce mode de réalisation, chaque portion formant cadre 151, 152, 153, 154 comprend une portion de cadre rectangulaire adaptée à entourer chaque joint d'étanchéité 41, 42, 43, 44 et des languettes 151', 152', 153', 154' permettant de manipuler les portions formant cadre 151, 152, 153, 154, notamment pour leur montage autour des joints d'étanchéité 41, 42, 43, 44 sur la surface 20a du collecteur 20.

Dans cet exemple de réalisation, l'entretoise 150 comporte en outre une portion d'appui central 155 disposée à équidistance des joints d'étanchéité 41, 42, 43, 44.

La portion d'appui central 155 est disposée au centre de la surface 20a du collecteur 20 et est formée d'une croix à quatre branches disposée dans le plan de couplage x, y.

La portion d'appui central 155 telle qu'illustrée à la figure 8 comporte en outre des orifices 156, ici au nombre de deux, permettant l'insertion de pions de positionnement (non illustrés). Ces pions de positionnement se montent dans des lamages réalisés dans la surface 20a du collecteur 20, et sont adaptés à s'insérer dans les orifices 156 de la portion d'appui central 155 de l'entretoise 150 et dans la plaque terminale inférieure 12 de l'empilement 10 pour garantir un centrage et un positionnement relatif précis de l'empilement 10, de la portion d'appui central 155 et du collecteur 20 pour un couplage sous pression.

La portion d'appui central 155 permet de limiter le moment fléchissant créé dans la plaque terminale inférieure 12 de l'empilement 10 et dans le collecteur 20 lors du couplage sous pression.

A la figure 8, l'entretoise 150 est ainsi constituée des quatre portions formant cadre 151, 152, 153, 154 et de la portion d'appui central 155. Elle présente des caractéristiques similaires à celles décrites précédemment en relation avec les figures 1 à 5 en terme de matériau utilisable, de raideur et d'aire de surface dans le plan de couplage (x,y) en fonction des caractéristiques des joints d'étanchéité 41, 42, 43, 44.

L'épaisseur E2 des portions formant cadre 151, 152, 153, 154 et de la portion d'appui central 155 est identique et l'épaisseur E2 des différentes pièces formant l'entretoise 150 est strictement inférieure à l'épaisseur E1 des joints d'étanchéité 41, 42, 43, 44.

Dans ce mode de réalisation, les portions formant cadre 151, 152, 153, 154 et la portion d'appui central 155 permettent de limiter le moment fléchissant appliqué à l'empilement 10 et au collecteur 20.

Par ailleurs, lorsque les portions formant cadre 151, 152, 153 ,154 sont formées de cadres ayant une section transversale de petite dimension, et par exemple sensiblement égale ou similaire à celle des joints d'étanchéité 41, 42, 43 ,44, les portions formant cadre 151, 152,153 ,154 peuvent être soumis à des contraintes de compression permettant de les comprimer suffisamment pour assurer une seconde barrière d'étanchéité, complémentaire à celle formée par chaque joint d'étanchéité 41, 42 43, 44 autour de chaque orifice de communication 21 ,22, 23, 24 du collecteur 20.

Dans un autre mode de réalisation illustré à la figure 9, lorsque le dispositif d'interface d'étanchéité 40 comporte plusieurs joints 41, 42, 43, 44, l'entretoise peut comporter uniquement une portion d'appui 250 disposée à équidistance des joints d'étanchéité 41, 42, 43, 44.

Dans le mode de réalisation illustré à la figure 9, la portion d'appui 250 forme une cale d'appui disposée au centre du plan de couplage (x,y) du collecteur 20 et de l'empilement 10. A titre d'exemple non limitatif, la portion d'appui 250 peut être en forme de rondelle 250. L'entretoise ainsi formée d'une portion d'appui 250 en forme de rondelle présente des caractéristiques similaires à celles décrites précédemment en relation avec les figures 1 à 5 en terme de matériau utilisable, de raideur et d'aire de surface dans le plan de couplage (x,y) en fonction des caractéristiques des joints d'étanchéité 41, 42, 43, 44.

L'épaisseur E2 de la portion d'appui 250 en forme de rondelle est strictement inférieure à l'épaisseur E1 des joints d'étanchéité 41, 42, 43, 44.

La portion d'appui 250 en forme de rondelle assure ainsi une fonction de limiteur d'écrasement, limitant une fois que l'appui s'établit sur la rondelle le mouvement de la plaque terminale inférieure 12 de l'empilement en direction de la surface 20a du collecteur 20. La portion d'appui 250 étant à équidistance des joints d'étanchéité 41, 42, 43, 44, la distance entre chaque point d'appui dans le plan de couplage, entre la portion d'appui 250 et les joints d'étanchéité 41, 42, 43, 44, est la plus faible possible. Le moment fléchissant créé dans la plaque terminale inférieure 12 de l'empilement 10 est ainsi d'autant plus réduit.

Bien entendu, la forme de rondelle pour la portion d'appui 250 est illustrative et pourrait être remplacée par une forme de disque ou de quadrilatère.

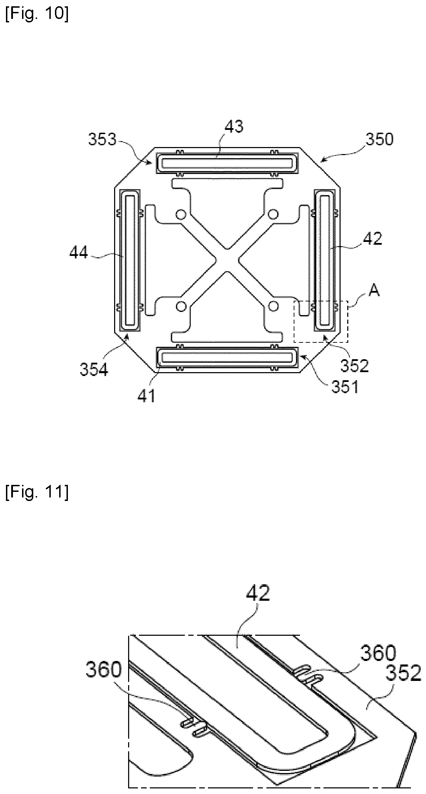

On va décrire à présent en référence aux figures 10 à 14 des exemples de montage avantageux des joints d'étanchéité 41, 42, 43, 44 dans une entretoise 350, 450 formée d'une structure plane monobloc comme décrit précédemment en références aux figures 1 à 5.

Les entretoises 350, 450 illustrées aux figures 10 à 14 sont similaires à celle décrite en référence aux figures 1 à 5 et présentent sensiblement les mêmes formes et caractéristiques que celles décrites précédemment en relation avec les figures 1 à 5.

Une entretoise 350, 450 ayant une structure plane monobloc permet de faciliter le positionnement du dispositif d'interface d'étanchéité 40 dans le plan de couplage (x,y). En montant en outre les joints d'étanchéité 41, 42, 43, 44 dans l'entretoise 350, 450, l'opération d'installation des joints d'étanchéité 41, 42, 43, 44 autour de chaque orifice 21, 22, 23, 24 peut être simplifiée.

Comme illustré aux figures 10 et 11, l'entretoise 350 comporte des portions formant cadre 351, 352, 353, 354 autour de chaque joint d'étanchéité 41, 42, 43, 44.

Des découpes de l'entretoise 350 au niveau des portions formant cadre 351, 352, 353, 354 sont prévues pour créer un ou plusieurs doigts 360 en saillie.

Ainsi, chaque portion formant cadre 351, 352, 353, 354 est munie d'un ou plusieurs doigts 360 en saillie s'étendant vers un joint d'étanchéité 41, 42, 43, 44 et en contact avec ce joint d'étanchéité 41, 42, 43, 44.

Dans le mode de réalisation illustré aux figures 10 et 11, chaque portion formant cadre 351, 352, 353, 354 comporte quatre doigts 360, répartis par paire de chaque côté d'un joint d'étanchéité 41, 42, 43, 44 dans sa longueur et disposés face à face par deux. Les doigts 360 forment ainsi quatre supports ou picots de maintien, maintenant le joint d'étanchéité 41, 42, 43, 44 à l'intérieur de la portion formant cadre 351, 352, 353, 354.

Les doigts 360 assure de préférence un support ponctuel des joints d'étanchéité 41, 42, 43, 44 et facilitent la mise en place de l'entretoise 350 et des joints d'étanchéité 41, 42, 43, 44 sur la surface 20a du collecteur 20.

En complément, un point de colle ou adhésif peut être ajouté au niveau de la zone de support ponctuel, en complément du simple appui mécanique formé par les doigts 360 contre les joints d'étanchéité 41, 42, 43, 44.

Dans un autre mode de réalisation, les éléments de maintien peuvent être formés du côté des joints d'étanchéité 41, 42, 43, 44.

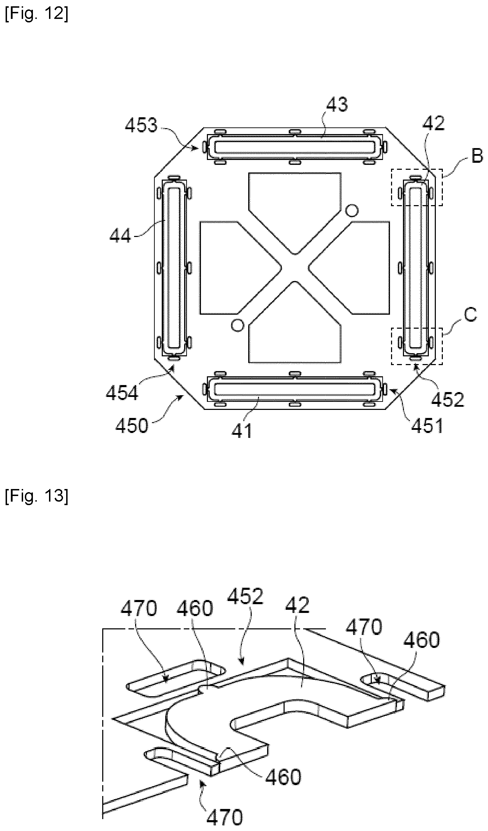

Comme illustré aux figures 12, 13 et 14, l'entretoise 450 comporte des portions formant cadre 451, 452, 453, 454 autour de chaque joint d'étanchéité 41, 42, 43, 44.

Chaque joint d'étanchéité 41, 42, 43, 44 comporte au moins une excroissance 460 s'étendant dans le plan de couplage (x,y) et en appui dans une zone de contact avec la portion formant cadre 451, 452, 453, 454 qui l'entoure.

Dans le mode de réalisation illustré aux figures 12 à 14, chaque joint d'étanchéité 41, 42, 43, 44 comporte huit excroissances 460 disposées symétriquement autour du joint d'étanchéité 41, 42, 43, 44.

Dans ce mode de réalisation, et à titre d'exemple non limitatif, chaque joint d'étanchéité 41, 42, 43, 44 comporte six excroissances 460 répartis par paire de chaque côté d'un joint d'étanchéité 41, 42, 43, 44, dans sa longueur, et disposés face à face par deux, et deux excroissances 460 disposées aux extrémités du joint d'étanchéité 41, 42, 43, 44.

Bien entendu, le nombre d'excroissance 460 autour des joints d'étanchéité 41, 42, 43, 44 et leur répartition ne sont que des exemples et peuvent varier en fonction de la forme et des dimensions des joints d'étanchéité 41, 42, 43, 44.

Les excroissances 460 sont adaptées à former des supports de maintien de chaque joint d'étanchéité 41, 42, 43, 44 dans la portion formant cadre 451, 452, 453, 454 qui l'entoure. Pour garantir une expansion du joint d'étanchéité 41, 42, 43, 44 lors de son écrasement au moment du couplage sous pression de l'empilement 10 et du collecteur 20, les portions formant cadre 451, 452, 453, 454 sont usinées de sorte que ces dernières ne s'opposent pas à l'expansion du joint d'étanchéité 41, 42, 43, 44 et induisent localement un sous écrasement du joint d'étanchéité 41, 42, 43, 44.

En pratique, la zone de contact de la portion formant cadre 451, 452, 453, 454 avec une excroissance 460 a une largeur réduite dans le plan de couplage (x,y) par rapport à la largeur de la portion formant cadre 451, 452, 453, 454 en dehors de la zone de contact. Une manière de procéder est de créer en regard de chaque excroissance 460 une zone de fragilisation sous la forme d'un usinage de la portion formant cadre 451, 452, 453, 454, laissant un espace libre derrière une bande de largeur réduite de la portion formant cadre 451, 452, 453, 454.

Dans le mode de réalisation illustré aux figures 12 à 14, chaque portion formant cadre 451, 452, 453, 454 comporte des évidements 470 usinés en vis-à-vis de chaque zone de contact de la portion formant cadre 451, 452, 453, 454 avec une excroissance 460 du joint d'étanchéité 41, 42, 43, 44.

La compression du joint d'étanchéité 41, 42, 43, 44 et son expansion créent un effort radial dans le plan de couplage (x,y), générant des contraintes dans la zone de contact, qui est ainsi capable de se déformer, voire casser. L'espace libre situé au niveau de la zone de contact grâce à l'évidement 470 permet à la bande de largeur réduite de la portion formant cadre 451, 452, 453, 454 d'être écartée lors de sa déformation ou après sa rupture, sans générer de surépaisseur locale au niveau du joint d'étanchéité 41, 42, 43, 44.

Plus généralement, l'invention telle que décrite ci-dessus peut être mise en œuvre pour tout type de géométrie de joint d'étanchéité plat inséré entre deux brides parallèles. La forme du dispositif d'interface d'étanchéité peut être très variable, dépendant de la forme des plaques mises en œuvre dans le plan de couplage.

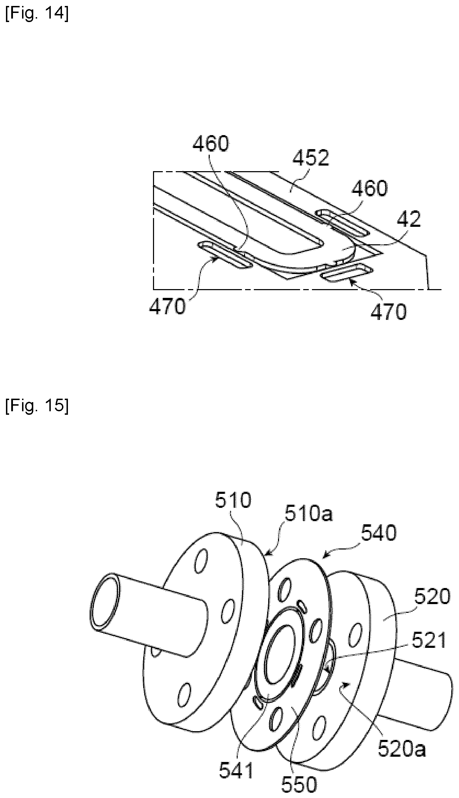

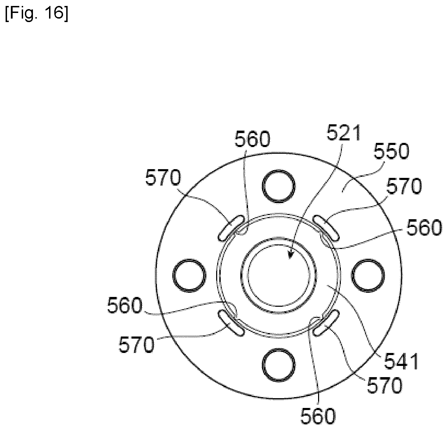

On a illustré aux figures 15 et 16 un exemple de mise en œuvre pour des brides standards du type bride PN6.

Dans les applications d'électrolyse à haute température (EHT), ce type de brides 510, 520 est équipé d'un joint d'étanchéité plat 541, par exemple en vermiculite.

Chaque bride 510, 520 comporte une plaque d'extrémité 510a, 520a dans laquelle débouche un orifice de communication pour l'amenée ou la sortie de gaz. Les plaques d'extrémité 510a, 520a sont parallèles l'une à l'autre et définissent entre elles un plan de couplage lors du couplage sous pression par un dispositif de serrage (non illustré) des deux brides 510, 520.

Le joint d'étanchéité plat 541 est ainsi disposé dans ce plan de couplage autour d'un orifice de communication 521 d'une plaque d'extrémité 510a d'une première bride 510.

Dans ce mode de réalisation, l'orifice de communication 521 est circulaire et le joint d'étanchéité plat 541 est formé d'une rondelle.

Le dispositif d'interface d'étanchéité 540 comprend, outre le joint d'étanchéité plat 541, une entretoise 550 disposée dans le plan de couplage entre les deux plaques d'extrémité 510a, 520a des brides 510, 520.

Comme visible à la figure 16, l'entretoise 550 et le joint d'étanchéité plat 541 forment une interface d'étanchéité ayant deux plans de symétrie perpendiculaires entre eux et perpendiculaires au plan de couplage.

Comme décrit précédemment pour les autres modes de réalisation, l'épaisseur du joint d'étanchéité 541 avant couplage sous pression des deux brides 510, 520 est strictement supérieure à l'épaisseur de l'entretoise 550.

Dans le mode de réalisation illustré aux figures 15 et 16, l'entretoise 550 est formée d'une rondelle autour du joint d'étanchéité plat 541, formant ainsi une portion de cadre s'étendant à la périphérie du joint d'étanchéité plat 541.

L'entretoise 550 ainsi constituée en forme de rondelle présente des caractéristiques similaires à celles décrites précédemment en relation avec les figures 1 à 5 en terme de matériau utilisable, de raideur et d'aire de surface dans le plan de couplage (x,y) en fonction des caractéristiques du joint d'étanchéité plat 541.

Dans ce mode de réalisation, l'entretoise 550 en forme de rondelle a une fonction de limiteur d'écrasement du joint d'étanchéité plat 541.

Elle évite de devoir contrôler le couple de serrage lors du montage sous pression des brides 510, 520. L'entretoise 550 évite d'atteindre un taux d'écrasement trop élevé du joint d'étanchéité plat 541, ce qui nuirait à l'étanchéité du montage des brides 510, 520.

Comme décrit précédemment en relation avec les figures 10 à 14, l'entretoise 550 peut comporter des moyens permettant de maintenir en position le joint d'étanchéité plat 541 à l'intérieur du cadre formé par l'entretoise en forme de rondelle, ce qui facilite son montage et son positionnement entre les deux brides 510, 520, notamment lorsque le plan de couplage entre les deux plaques d'extrémité 510a, 520a des deux brides est dans un plan vertical. Le centrage du joint d'étanchéité plat 541 est ainsi facilité.

Dans le mode de réalisation illustré aux figures 15 et 16, le joint d'étanchéité plat 541 comporte des excroissances 560 s'étendant dans le plan de couplage et en appui dans une zone de contact avec la portion formant cadre de l'entretoise 550 qui l'entoure.

A titre d'exemple, le joint d'étanchéité plat 541 comporte quatre excroissances 560 disposées symétriquement autour du joint d'étanchéité plat 541, et par exemple suivant deux diamètres perpendiculaires du joint d'étanchéité plat 541 en forme de rondelle.

Bien entendu, le nombre d'excroissances 560 autour du joint d'étanchéité 541 et leur répartition peuvent varier en fonction de la forme et des dimensions du joint d'étanchéité plat 541.

Comme décrit en relation avec les figures 12 à 14, les excroissances 560 sont adaptées à former des supports de maintien du joint d'étanchéité 541, 42, 43, 44 dans l'entretoise 550. Pour garantir une expansion du joint d'étanchéité plat 541 lors de son écrasement au moment du couplage sous pression des deux brides 510, 520, l'entretoise 550 comporte des évidements 570 usinés en vis-à-vis de chaque zone de contact de l'entretoise 550 avec une excroissance 560 du joint d'étanchéité plat 541. Les caractéristiques et avantages de cette configuration de maintien sont similaires à ceux décrits en relation avec les figures 12 à 14. Alternativement, les moyens de maintien en position du joint d'étanchéité plat 541 à l'intérieur du cadre formé par l'entretoise 550 en forme de rondelle, peuvent être formés par des doigts en saillie (non illustrés) sur l'entretoise 550, s'étendant vers le joint d'étanchéité plat 541 et en contact avec le joint d'étanchéité plat 541. Une telle configuration de maintien présente des caractéristiques et avantages analogues à ceux décrits en relation avec le mode de réalisation des figures 10 et 11.

Grace à ces moyens de maintien, le positionnement et le centrage du joint d'étanchéité plat 541, couplé à l'entretoise 550, sont facilités dans le plan de couplage. L'entretoise 550 permet également de garantir une bonne isolation électrique et d'assurer une seconde barrière d'étanchéité autour du joint d'étanchéité plat 541.

Bien entendu, la présente invention n'est pas limitée aux exemple de réalisation donnés ci-dessus.

En particulier, le dispositif d'interface d'étanchéité peut être applicable à toutes les applications haute température et faible pression. Il peut équiper tout type d'ensemble de distribution de gaz mettant en œuvre différente géométrie de joints plats insérés entre deux brides ou plaques parallèles.

## Revendications

1. Ensemble de distribution de gaz comprenant :
- une première plaque (20 ; 510a) et une seconde plaque (12 ; 520a), la première plaque (20 ; 510a) comprenant au moins un orifice de communication (21, 22, 23, 24 ; 521) pour l'amenée ou la sortie de gaz positionné en vis-à-vis d'un orifice de communication (121, 122, 123, 124) correspondant de la seconde plaque (12), lesdites première et seconde plaques s'étendant parallèlement l'une à l'autre ;
- un dispositif de serrage (30) pour coupler sous pression lesdites première et seconde plaques (20, 12) dans un plan de couplage ((x,y)) parallèle auxdites première et seconde plaques ; et
- un dispositif d'interface d'étanchéité (40 ; 540) comportant au moins un joint d'étanchéité (41, 42, 43, 44 ; 541) disposé dans ledit plan de couplage ((x,y)) autour dudit au moins un orifice de communication (21, 22, 23, 24 ; 521) de ladite première plaque (20 ; 510a),
**caractérisé en ce que** le dispositif d'interface d'étanchéité (40 ; 540) comprend une entretoise (50 ; 150 ; 250 ; 350 ; 450 ; 550) disposée dans ledit plan de couplage ((x,y)) entre les première et seconde plaques (20, 12 ; 510a , 520a), ladite entretoise (50 ; 150 ; 250 ; 350 ; 450 ; 550) et le ou les joint(s) d'étanchéité (41, 42, 43, 44 ; 541) formant une interface d'étanchéité ayant deux plans de symétrie ((x,z), (y,z)) perpendiculaires entre eux et perpendiculaires audit plan de couplage ((x,y)), l'épaisseur du ou des joint(s) d'étanchéité (41, 42, 43, 44 ; 541) avant couplage sous pression desdites première et seconde plaques (20, 12 ; 510a, 520a) étant strictement supérieure à l'épaisseur de ladite entretoise (50 ; 150 ; 250 ; 350 ; 450 ; 550).

2. Ensemble de distribution de gaz conforme à la revendication 1, **caractérisé en ce que** l'aire de la surface formée par l'entretoise (50 ; 150 ; 250 ; 350 ; 450 ; 550) dans ledit plan de couplage ((x,y)) est supérieure à l'aire de la surface formée par le ou les joint(s) d'étanchéité (41, 42, 43, 44 ; 541) dans ledit plan de couplage ((x, y)).

3. Ensemble de distribution de gaz conforme à l'une des revendications 1 ou 2, **caractérisé en ce que** la raideur du matériau constituant l'entretoise (50 ; 150 ; 250 ; 350 ; 450 ; 550) est supérieure à la raideur du matériau constituant le ou les joint(s) d'étanchéité (41, 42, 43, 44 ; 541).

4. Ensemble de distribution de gaz conforme à l'une des revendications 1 à 3, **caractérisé en ce que** ladite entretoise (50 ; 150 ; 350 ; 450 ; 550) comporte au moins une portion formant cadre (51, 52, 53, 54 ; 151, 152, 153, 154 ; 351, 352, 353, 354 ; 451, 452, 453, 453 ; 550) s'étendant à la périphérie d'un joint d'étanchéité (41, 42, 43, 44 ; 541).

5. Ensemble de distribution de gaz conforme à l'une des revendications 1 à 4, **caractérisé en ce que** le dispositif d'interface d'étanchéité (40) comporte plusieurs joints d'étanchéité (41, 42, 43, 44), ladite entretoise (50 ; 150 ; 250) comportant une portion d'appui (55 ; 155 ; 250) disposée à équidistance desdits joints d'étanchéité (41, 42, 43, 44).

6. Ensemble de distribution de gaz conforme à la revendication 5, **caractérisé en ce que** ladite entretoise (50 ; 150 ; 350 ; 450) comporte plusieurs portions formant cadre (51, 52, 53, 54 ; 151, 152, 153, 154 ; 351, 352, 353, 354 ; 451, 452, 453, 454) s'étendant à la périphérie respectivement desdits plusieurs joints d'étanchéité (41, 42, 43, 44).

7. Ensemble de distribution de gaz conforme à la revendication 6, caractérisé en que ladite entretoise (50 ; 350 ; 450) est formée d'une structure plane monobloc comportant lesdites portions formant cadre (51, 52, 53, 54 ; 351, 352, 353, 354 ; 451, 452, 453, 454).

8. Ensemble de distribution de gaz conforme à l'une des revendications 4 à 7, **caractérisé en ce que** les dimensions d'une ouverture formée par chaque portion formant cadre (51, 52, 53, 54 ; 151, 152, 153, 154 ; 351, 352, 353, 354 ; 451, 452, 453, 454 ; 550) s'étendant à la périphérie d'un joint d'étanchéité (41, 42, 43, 44 ; 541) dans le plan de couplage ((x,y)) sont strictement supérieures aux dimensions dudit joint d'étanchéité (41, 42, 43, 44 ; 541) dans ledit plan de couplage ((x, y)).

9. Ensemble de distribution de gaz conforme à la revendication 8, **caractérisé en ce que** chaque portion formant cadre (351, 352, 353, 354) est munie d'un ou plusieurs doigts en saillie (360) s'étendant vers ledit joint d'étanchéité (41, 42, 43, 44) et en contact avec ledit joint d'étanchéité (41, 42, 43, 44).

10. Ensemble de distribution de gaz conforme à l'une des revendications 8 ou 9, **caractérisé en ce que** ledit joint d'étanchéité (41, 42, 43, 44 ; 541) comporte au moins une excroissance (460 ; 560) s'étendant dans le plan de couplage ((x,y)) et en appui dans une zone de contact avec la portion formant cadre (451, 452, 453, 454 ; 550), ladite zone de contact de la portion formant cadre (451, 452, 453, 454 ; 550) ayant une largeur réduite dans le plan de couplage ((x,y)) par rapport à la largeur de la portion formant cadre (451, 452, 453, 454 ; 550) en dehors de ladite zone de contact.

11. Ensemble de distribution de gaz conforme à l'une des revendications 1 à 10, **caractérisé en ce que** le ou les joint(s) d'étanchéité (41, 42, 43, 44 ; 541) est/sont réalisé(s) en un matériau à base minérale tel qu'en mica, argile ou talc.

12. Ensemble de distribution de gaz conforme à l'une des revendications 1 à 11, **caractérisé en ce que** ladite entretoise (50 ; 150 ; 250 ; 350 ; 450 ; 550) est réalisée en un matériau à base minérale, tel qu'en mica, argile ou talc.

13. Ensemble de distribution de gaz conforme à l'une des revendications 1 à 12, **caractérisé en ce que** l'épaisseur du ou des joint(s) d'étanchéité (41, 42, 43, 44 ; 541) est comprise entre 0,3 et 1 mm, et de préférence entre 0,5 et 1 mm avant couplage sous pression desdites première et seconde plaques (20, 12 ; 510a, 520a).

14. Ensemble de distribution de gaz conforme à la revendication 13, **caractérisé en ce que** l'épaisseur du ou des joint(s) d'étanchéité (41, 42, 44, 45 ; 541) est sensiblement égale à 1 mm et l'épaisseur de ladite entretoise (50 ; 150 ; 250 ; 350 ; 450 ; 550) est sensiblement égale à 0,8 mm avant couplage sous pression desdites première et seconde plaques (20, 12 ; 510a, 520a).

15. Ensemble de distribution de gaz conforme à l'une des revendications 1 à 14, **caractérisé en ce que** ladite première plaque (20) est une plaque de distribution de gaz et ladite seconde plaque (12) est une plaque terminale d'un empilement à oxydes solides (10) de type SOEC/SOFC fonctionnant à haute température.

## Patentansprüche

1. Gasverteilungseinheit, umfassend:
- eine erste Platte (20; 510a) und eine zweite Platte (12; 520a), wobei die erste Platte (20; 510a) mindestens eine Kommunikationsöffnung (21, 22, 23, 24; 521) umfasst, für die Gaszufuhr oder den Gasauslass, die/der gegenüber einer entsprechenden Kommunikationsöffnung (121, 122, 123, 124) der zweiten Platte (12) positioniert ist, wobei sich die erste und zweite Platte parallel zueinander erstrecken;
- eine Klemmvorrichtung (30), um die ersten und zweiten Platten (20, 12) unter Druck in einer Koppelebene ((x,y)) parallel zu den ersten und zweiten Platten zu koppeln; und
- eine Dichtungsschnittstellenvorrichtung (40; 540) mit mindestens einer Dichtung (41, 42, 43, 44; 541), die in der Koppelebene ((x,y)) um die mindestens eine Kommunikationsöffnung (21, 22, 23, 24; 521) der ersten Platte (20; 510a) angeordnet ist,
**dadurch gekennzeichnet, dass** die Dichtungsschnittstellenvorrichtung (40; 540) einen Abstandshalter (50; 150; 250; 350; 450; 550) umfasst, der in der Koppelebene ((x, y)) zwischen der ersten und der zweiten Platte (20, 12; 510a, 520a) angeordnet ist, wobei der Abstandshalter (50; 150; 250; 350; 450; 550) und die Dichtung(en) (41, 42, 43, 44; 541) eine Dichtungsschnittstelle mit zwei zueinander senkrechten und zur Koppelebene ((x, y)) senkrechten Symmetrieebenen ((x, z), (y, z)) bilden, wobei die Dicke der Dichtung(en) (41, 42, 43, 44; 541) vor dem Koppeln der ersten und zweiten Platte (20, 12; 510a, 520a) unter Druck streng größer ist als die Dicke des Abstandshalters (50; 150; 250; 350; 450; 550).

2. Gasverteilungseinheit nach Anspruch 1, **dadurch gekennzeichnet, dass** die Fläche der durch den Abstandshalter (50; 150; 250; 350; 450; 550) in der Koppelebene ((x,y)) gebildeten Fläche größer ist als die Fläche der durch die Dichtung(en) (41, 42, 43, 44; 541) in der Koppelebene ((x,y)) gebildeten Fläche.

3. Gasverteilungseinheit nach einem der Ansprüche 1 oder 2, **dadurch gekennzeichnet, dass** die Steifigkeit des Materials, aus dem das Distanzstück (50; 150; 250; 350; 450; 550) besteht, größer ist als die Steifigkeit des Materials, aus dem die Dichtung(en) (41, 42, 43, 44; 541) besteht.

4. Gasverteilungseinheit nach einem der Ansprüche 1 bis 3, **dadurch gekennzeichnet, dass** der Abstandshalter (50; 150; 350; 450; 550) mindestens einen rahmenbildenden Abschnitt (51, 52, 53, 54; 151, 152, 153, 154; 351, 352, 353, 354; 451, 452, 453, 453; 550) aufweist, der sich bis zu dem Umfang einer Dichtung (41, 42, 43, 44; 541) erstreckt.

5. Gasverteilungseinheit nach einem der Ansprüche 1 bis 4, **dadurch gekennzeichnet, dass** die Dichtungsschnittstellenvorrichtung (40) mehrere Dichtungen (41, 42, 43, 44) aufweist, wobei der Abstandshalter (50; 150; 250) einen Stützabschnitt (55; 155; 250) aufweist, der im gleichen Abstand zu den Dichtungen (41, 42, 43, 44) angeordnet ist.

6. Gasverteilungseinheit nach Anspruch 5, **dadurch gekennzeichnet, dass** der Abstandshalter (50; 150; 350; 450) mehrere rahmenbildende Abschnitte (51, 52, 53, 54; 151, 152, 153, 154; 351, 352, 353, 354; 451, 452, 453, 454) aufweist, die sich jeweils an dem Umfang der mehreren Dichtungen (41, 42, 43, 44) erstrecken.

7. Gasverteilungseinheit nach Anspruch 6, **dadurch gekennzeichnet, dass** der Abstandshalter (50; 350; 450) aus einer einteiligen flachen Struktur mit den rahmenbildenden Abschnitten (51, 52, 53, 54; 351, 352, 353, 354; 451, 452, 453, 454) gebildet ist.

8. Gasverteilungseinheit nach einem der Ansprüche 4 bis 7, **dadurch gekennzeichnet, dass** die Abmessungen einer Öffnung, die von jedem rahmenbildenden Abschnitt (51, 52, 53, 54; 151, 152, 153, 154; 351, 352, 353, 354; 451, 452, 453, 454; 550) gebildet wird und sich am Umfang einer Dichtung (41, 42, 43, 44; 541) in der Koppelebene ((x, y)) erstreckt, streng größer sind als die Abmessungen der Dichtung (41, 42, 43, 44; 541) in der Koppelebene ((x, y)).

9. Gasverteilungseinheit nach Anspruch 8, **dadurch gekennzeichnet, dass** jeder rahmenbildende Abschnitt (351, 352, 353, 354) mit einem oder mehreren vorstehenden Fingern (360) versehen ist, die sich zu der Dichtung (41, 42, 43, 44) erstrecken und mit der Dichtung (41, 42, 43, 44) in Kontakt stehen.

10. Gasverteilungseinheit nach einem der Ansprüche 8 oder 9, **dadurch gekennzeichnet, dass** die Dichtung (41, 42, 43, 44; 541) mindestens einen Vorsprung (460; 560) aufweist, der sich in der Koppelebene ((x, y)) erstreckt und in einem Kontaktbereich mit dem Rahmenabschnitt (451, 452, 453, 454; 550) abstützt, wobei der Kontaktbereich des rahmenbildenden Abschnitts (451, 452, 453, 454; 550) in der Koppelebene ((x, y)) im Vergleich zur Breite des Rahmenabschnitts (451, 452, 453, 454; 550) außerhalb des Kontaktbereichs eine reduzierte Breite aufweist.

11. Gasverteilungseinheit nach einem der Ansprüche 1 bis 10, **dadurch gekennzeichnet, dass** die Dichtung(en) (41, 42, 43, 44; 541) aus einem mineralischen Material wie Glimmer, Ton oder Talkum hergestellt ist/sind.

12. Gasverteilungseinheit nach einem der Ansprüche 1 bis 11, **dadurch gekennzeichnet, dass** der Abstandshalter (50; 150; 250; 350; 450; 550) aus einem mineralischen Material wie Glimmer, Ton oder Talkum hergestellt ist.

13. Gasverteilungseinheit nach einem der Ansprüche 1 bis 12, **dadurch gekennzeichnet, dass** die Dicke der Dichtung(en) (41, 42, 43, 44; 541) vor dem Koppeln der ersten und zweiten Platten (20, 12; 510a, 520a) unter Druck zwischen 0,3 und 1 mm, und vorzugsweise zwischen 0,5 und 1 mm, liegt.

14. Gasverteilungseinheit nach Anspruch 13, **dadurch gekennzeichnet, dass** die Dicke der Dichtung(en) (41, 42, 44, 45; 541) im Wesentlichen 1 mm beträgt und die Dicke des Abstandshalters (50; 150; 250; 350; 450; 550) vor dem Koppeln der ersten und zweiten Platte (20, 12; 510a, 520a) unter Druck im Wesentlichen 0,8 mm beträgt.

15. Gasverteilungseinheit nach einem der Ansprüche 1 bis 14, **dadurch gekennzeichnet, dass** die erste Platte (20) eine Gasverteilungsplatte und die zweite Platte (12) eine Endplatte eines bei hoher Temperatur arbeitenden Festoxidstapels (10) vom Typ SOEC/SOFC ist.

## Claims

1. Gas-distribution assembly comprising:
- a first plate (20; 510a) and a second plate (12; 520a), the first plate (20; 510a) comprising at least one communication port (21, 22, 23, 24; 521) for the gas inlet or outlet positioned opposite a corresponding communication port (121, 122, 123, 124) of the second plate (12), said first and second plates extending parallel to one another;
- a clamping device (30) for compressively coupling said first and second plates (20, 12) in a coupling plane ((x,y)) parallel to said first and second plates; and
- a sealing interface device (40; 540) comprising at least one seal (41, 42, 43, 44; 541) disposed in said coupling plane ((x,y)) around said at least one communication port (21, 22, 23, 24; 521) of said first plate (20; 510a),
**characterised in that** the sealing interface device (40; 540) comprises a spacer (50; 150; 250; 350; 450; 550) disposed in said coupling plane ((x,y)) between the first and second plates (20, 12; 510a , 520a), said spacer (50; 150; 250; 350; 450; 550) and the seal(s) (41, 42, 43, 44; 541) forming a sealing interface having two planes of symmetry ((x,z), (y,z)) perpendicular to each other and perpendicular to said coupling plane ((x,y)), the thickness of the seal(s) (41, 42, 43, 44; 541) before pressure coupling of said first and second plates (20, 12; 510a, 520a) being strictly greater than the thickness of said spacer (50; 150; 250; 350; 450; 550).

2. Gas-distribution assembly according to claim 1, **characterised in that** the area of the surface formed by the spacer (50; 150; 250; 350; 450; 550) in said coupling plane ((x,y)) is greater than the area of the surface formed by the seal(s) (41, 42, 43, 44; 541) in said coupling plane ((x,y)).

3. Gas-distribution assembly according to one of claims 1 or 2, **characterised in that** the stiffness of the material constituting the spacer (50; 150; 250; 350; 450; 550) is greater than the stiffness of the material constituting the seal(s) (41, 42, 43, 44; 541).

4. Gas-distribution assembly according to one of claims 1 to 3, **characterised in that** said spacer (50; 150; 350; 450; 550) comprises at least one frame-forming portion (51, 52, 53, 54; 151, 152, 153, 154; 351, 352, 353, 354; 451, 452, 453, 453; 550) extending to the periphery of a seal (41, 42, 43, 44; 541).

5. Gas-distribution assembly according to one of claims 1 to 4, **characterised in that** the sealing interface device (40) comprises several seals (41, 42, 43, 44), said spacer (50; 150; 250) comprising a bearing portion (55; 155; 250) arranged equidistantly from said seals (41, 42, 43, 44).

6. Gas-distribution assembly according to claim 5, **characterised in that** said spacer (50; 150; 350; 450) comprises several frame-forming portions (51, 52, 53, 54; 151, 152, 153, 154; 351, 352, 353, 354; 451, 452, 453, 454) extending to the periphery respectively of said plurality of seals (41, 42, 43, 44).

7. Gas-distribution assembly according to claim 6, **characterised in that** said spacer (50; 350; 450) is formed of a one-piece flat structure comprising said frame-forming portions (51, 52, 53, 54; 351, 352, 353, 354; 451, 452, 453, 454).

8. Gas-distribution assembly according to one of claims 4 to 7, **characterised in that** the dimensions of an opening formed by each frame-forming portion (51, 52, 53, 54; 151, 152, 153, 154; 351, 352, 353, 354; 451, 452, 453, 454; 550) extending to the periphery of a seal (41, 42, 43, 44; 541) in the coupling plane ((x,y)) are strictly greater than the dimensions of said seal (41, 42, 43, 44; 541) in said coupling plane ((x,y)).

9. Gas-distribution assembly according to claim 8, **characterised in that** each frame-forming portion (351, 352, 353, 354) is provided with one or more protruding fingers (360) extending toward said seal (41, 42, 43, 44) and in contact with said seal (41, 42, 43, 44).

10. Gas-distribution assembly according to one of claims 8 or 9, **characterised in that** said seal (41, 42, 43, 44; 541) includes at least one bulge (460; 560) extending in the coupling plane ((x,y)) and bearing in a contact area with the frame portion (451, 452, 453, 454; 550), said contact area of the frame-forming portion (451, 452, 453, 454; 550) having a reduced width in the coupling plane ((x,y)) relative to the width of the frame-forming portion (451, 452, 453, 454; 550) outside said contact area.

11. Gas-distribution assembly according to any one of claims 1 to 10, **characterised in that** the seal(s) (41, 42, 43, 44; 541) is/are made of a mineral-based material such as mica, clay or talc.

12. Gas-distribution assembly according to one of claims 1 to 11, **characterised in that** said spacer (50; 150; 250; 350; 450; 550) is made of a mineral-based material, such as mica, clay or talc.

13. Gas-distribution assembly according to one of claims 1 to 12, **characterised in that** the thickness of the seal(s) (41, 42, 43, 44; 541) is between 0.3 and 1 mm, and preferably between 0.5 and 1 mm, before pressure coupling of said first and second plates (20, 12; 510a, 520a).

14. Gas-distribution assembly according to claim 13, **characterised in that** the thickness of the seal(s) (41, 42, 44, 45; 541) is substantially equal to 1 mm and the thickness of said spacer (50; 150; 250; 350; 450; 550) is substantially equal to 0.8 mm before pressure coupling of said first and second plates (20, 12; 510a, 520a).

15. Gas-distribution assembly according to one of claims 1 to 14, **characterised in that** said first plate (20) is a gas-distribution plate and said second plate (12) is an end plate of a SOEC/SOFC-type solid oxide stack (10) operating at high temperature.
